Europäisches Patentamt

European Patent Office

Office européen des brevets

(19)

(11) Numéro de publication : **0 146 460**
**B1**

(12) **FASCICULE DE BREVET EUROPÉEN**

(45) Date de publication du fascicule du brevet :
09.11.88

(51) Int. Cl.⁴ : **F 16 P   3/14**

(21) Numéro de dépôt : **84402499.2**

(22) Date de dépôt : **05.12.84**

(54) Procédé et dispositif de protection, au moyen d'un faisceau laser, d'une machine de travail d'une tôle.

(30) Priorité : **06.12.83 FR 8319468**

(43) Date de publication de la demande :
**26.06.85 Bulletin 85/26**

(45) Mention de la délivrance du brevet :
**09.11.88 Bulletin 88/45**

(84) Etats contractants désignés :
**AT BE CH DE GB IT LI LU NL SE**

(56) Documents cités :
**DE-A- 2 213 247**
**DE-B- 2 750 234**
**FR-A- 1 032 128**
**FR-A- 2 512 920**
**GB-A- 1 307 078**
**US-A- 4 166 369**
**WERKSTATTSTECHNIK UND MASCHINENBAU,
année 42, no. 5, mai 1952, pages 180-182; W.
KLICKERMANN: "Lichtelektrischer Unfallschutz an
Pressen",**
**METALWORKING PRODUCTION, vol. 107, no. 50, 11
décembre 1963, pages 53-56; BERNARD WELLS:
"Making presses really automatic"**

(73) Titulaire : **Agence SYRTIS
6, Sentier des Buats
F-92190 Meudon (FR)**

(72) Inventeur : **Croguennec, Jean
421, rue aux Chiens
F-45160 Olivet (FR)**

(74) Mandataire : **Bruder, Michel
10 rue de la Pépinière
F-75008 Paris (FR)**

EP 0 146 460 B1

## Description

La présente invention concerne un procédé et un dispositif de protection, au moyen d'un faisceau laser, d'une machine de travail d'une tôle telle que presse plieuse, cisaille, rouleuse ou tout autre machine similaire.

On connaît déjà, ainsi qu'il est décrit dans les brevets US-A-2 512 920 et US-A-4 166 369, des dispositifs de protection de machines du type précité qui comportent un ensemble générateur d'au moins un faisceau laser horizontal, cet ensemble comprenant, d'un côté de la machine, un émetteur du faisceau laser et, de l'autre côté de la machine, un récepteur de ce faisceau laser, l'émetteur et le récepteur étant situés dans un même plan horizontal. Le faisceau laser ainsi produit est situé à une hauteur, par rapport à un plan de référence, qui dépend de la hauteur d'accostage, c'est-à-dire de la hauteur de la surface supérieure de la tôle par rapport à ce plan de référence. Dans le cas d'une presse plieuse la hauteur de sécurité à laquelle se trouve le faisceau laser dépend de la hauteur du Vé de pliage utilisé et de l'épaisseur de la tôle devant être pliée. Cette hauteur de sécurité est égale à la somme de la hauteur du Vé de pliage et de l'épaisseur de la tôle, augmentée d'une distance qui est inférieure à l'épaisseur d'un doigt et qui est choisie inférieure à 8 mm.

On conçoit donc qu'il y a lieu d'adapter en permanence la hauteur de sécurité à laquelle se trouve le faisceau laser, suivant l'épaisseur des tôles travaillées, la hauteur des Vés de pliage etc.

La présente invention a pour but de fournir un procédé et un dispositif de protection qui permettent de supprimer toute interprétation de la part de l'utilisateur de la machine, en ce qui concerne la bonne position du faisceau laser, et d'assurer automatiquement la mise en position de celui-ci à partir de la seule information nécessaire pour la production, c'est-à-dire de la hauteur d'accostage à laquelle l'élément mobile de la machine vient rencontrer la tôle à cisailler, à rouler ou à plier.

A cet effet ce procédé de protection, au moyen d'un faisceau laser, d'une machine de travail d'une tôle, telle qu'une presse plieuse, une cisaille, une rouleuse ou une autre machine similaire, comportant un outil mobile verticalement en direction de la tôle en appui sur un support, dans lequel on détermine la hauteur de sécurité où doit se trouver le faisceau laser horizontal par rapport à un plan horizontal de référence, pour assurer la protection de l'utilisateur de la machine, en ajoutant à la hauteur de la surface d'accostage, c'est-à-dire la hauteur de la surface supérieure de la tôle par rapport au plan de référence, une distance de sécurité inférieure à 8 mm, on déplace verticalement l'émetteur du faisceau laser, on mesure en permanence la hauteur effective du faisceau laser émis par rapport au plan de référence, on compare cette hauteur effective du faisceau laser avec la hauteur de sécurité prédéterminée et on arrête le mouvement vertical de l'émetteur du faisceau laser lorsque la hauteur de ce faisceau devient égale à la hauteur de sécurité, est caractérisé en ce qu'on déplace verticalement le récepteur, indépendamment de l'émetteur, en retard par rapport à celui-ci, jusqu'à ce qu'il se trouve aligné avec l'émetteur, ce qui provoque alors l'arrêt du récepteur dans cette position.

L'invention a également pour objet un dispositif de protection, au moyen d'un faisceau laser, d'une machine de travail d'une tôle, comportant un outil mobile verticalement en direction de la tôle en appui sur un support, un ensemble générateur de faisceau laser horizontal comportant, d'un côté de la machine, un émetteur et de l'autre côté de la machine, un récepteur du faisceau laser, de manière à commander automatiquement l'arrêt de la machine lorsque le faisceau laser est intercepté, des vérins pour déplacer respectivement, dans le sens vertical, l'émetteur et le récepteur du faisceau laser, des moyens pour mesurer la hauteur effective de l'émetteur du faisceau laser par rapport à un plan de référence, des moyens pour calculer une hauteur de sécurité où doit se trouver le faisceau laser en ajoutant à la hauteur de la surface d'accostage, c'est-à-dire la hauteur de la surface supérieure de la tôle par rapport au plan de référence, une distance de sécurité inférieure à 8 mm, un comparateur pour comparer la hauteur effective de l'émetteur du faisceau laser avec la hauteur de sécurité calculée et pour commander le mouvement vertical de l'émetteur et l'arrêt de celui-ci lorsque la hauteur du faisceau laser devient égale à la hauteur de sécurité précalculée, caractérisé en ce que le comparateur est connecté au dispositif d'alimentation associé au vérin commandant le déplacement du récepteur de manière à appliquer, avec un léger décalage, un signal commandant le déplacement vertical du récepteur après celui de l'émetteur jusqu'à ce que le récepteur s'arrête à l'alignement avec l'émetteur.

Le procédé et le dispositif suivant l'invention offrent l'avantage que l'utilisateur de la machine a seulement à programmer, par exemple au moyen de claviers ou à partir d'un programme numérique, les deux valeurs variables que constitue l'épaisseur de la tôle devant être travaillée et, dans le cas des presses plieuses, la hauteur du Vé de pliage. Ces informations ayant été introduites dans le dispositif de protection suivant l'invention, celui-ci provoque automatiquement le déplacement vertical de l'émetteur du faisceau laser et corrélativement celui du récepteur, pour que le faisceau laser de protection se trouve placé exactement à la hauteur désirée, et ce quelle que soit l'épaisseur de la tôle à travailler.

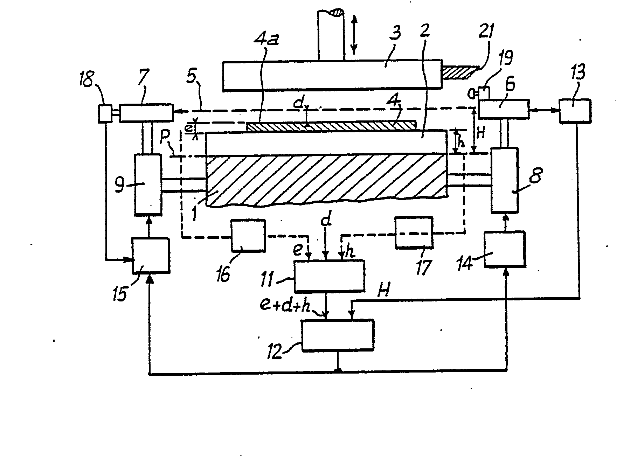

On décrira ci-après, à titre d'exemple non limitatif, une forme d'exécution de la présente invention, en référence au dessin annexé sur lequel :

La figure unique est un schéma synoptique d'un dispositif de protection suivant l'invention appliqué à une presse plieuse.

Le dispositif de protection représenté sur le dessin est associé à une presse plieuse qui est représentée schématiquement et partiellement comme comportant un bâti 1 sur la partie supérieure de laquelle se trouve une matrice constituée, par exemple, par un Vé de pliage 2 et au-dessus de laquelle est montée mobile verticalement un outil de section droite correspondant à celle de la matrice, c'est-à-dire une lame de pliage 3, dans le cas particulier considéré. Cette presse plieuse est destinée à plier en Vé une tôle 4 d'épaisseur e variable. La protection de cette presse plieuse est assurée au moyen d'un faisceau laser horizontal 5 qui s'étend dans le plan vertical de la lame de pliage 3. Ce faisceau laser est produit par un émetteur 6, situé d'un côté de la machine, en l'occurrence du côté droit, et il est capté par un récepteur 7 situé du côté opposé c'est-à-dire du côté gauche, l'émetteur 6 et le récepteur 7 étant coaxiaux.

Pour assurer la protection d'une telle presse plieuse, le faisceau laser 5 est situé au-dessus de la tôle 4, à une distance de sécurité d par rapport à la surface supérieure 4a de la tôle, surface qui constitue la surface d'accostage. Cette distance d est choisie inférieure à l'épaisseur d'un doigt et en pratique inférieure à 8 mm.

Suivant l'invention l'émetteur 6 et le récepteur 7 du faisceau laser 5 sont montés mobiles verticalement sous la commande de moteurs respectifs 8 et 9. Ces moteurs peuvent être constitués par des vérins de précision du type électrique, qui sont solidaires du bâti 1 de la machine.

Le dispositif de protection comprend par ailleurs un circuit additionneur 11 qui reçoit à son entrée des signaux représentant l'épaisseur e de la tôle 4 à plier, la hauteur h du Vé de pliage 2, et une valeur constante qui correspond à la distance de sécurité d. Cet additionneur 11 est connecté, à sa sortie, à une première entrée d'un comparateur 12 à deux entrées. La seconde entrée du comparateur 12 est reliée à un capteur de position 13 qui mesure à tout instant la hauteur effective H de l'émetteur 6 par rapport à un plan de référence horizontal P qui peut être celui de la table de la presse. Le comparateur 12 est connecté, à sa sortie, à deux dispositifs 14, 15 commandant respectivement l'alimentation des vérins électriques 8, 9.

Le fonctionnement du dispositif suivant l'invention est la suivante :

L'utilisateur de la presse plieuse introduit préalablement des valeurs correspondant à l'épaisseur de la tôle à plier et à la hauteur h du Vé de pliage. Cette introduction peut être réalisée au moyen de deux claviers 16, 17 ou bien encore à partir d'un programme numérique. Les valeurs e et h sont ajoutées, dans le circuit additionneur 11, à la distance de sécurité d et le circuit additionneur 11 fournit à sa sortie un signal qui correspond à la somme ainsi obtenue. Par ailleurs le capteur de position 13 fournit à la seconde entrée du comparateur 12 un signal H correspondant à la hauteur effective de l'émetteur laser 6. Comme les deux signaux ont des valeurs différentes, le comparateur 12 émet à sa sortie un signal transmis au dispositif d'alimentation 14 qui fait monter ou descendre, en vitesse rapide, l'émetteur 6, en fonction de la position qu'il se trouve occuper. Le comparateur 12 applique également un signal, avec un léger décalage, au dispositif d'alimentation 15 associé au vérin électrique 9 commandant le déplacement du récepteur 7. Ce dernier est alors déplacé verticalement, dans le même sens que l'émetteur 6, à une vitesse sensiblement comparable mais pas nécessairement identique à celle de l'émetteur.

Lorsque l'émetteur 6 se trouve atteindre la position dans laquelle la hauteur effective H du faisceau laser 5 est égale à la hauteur de sécurité précalculée e + d + h, le comparateur 12, constatant cette égalité, agit sur le dispositif 14 pour arrêter l'émetteur 6. A partir de ce moment le faisceau laser se trouve être émis à la hauteur de sécurité H désiré. Le récepteur 7 qui se déplace moins vite que l'émetteur 6 continue son mouvement jusqu'à ce qu'il se trouve aligné avec l'émetteur 6. A ce moment la photodiode du récepteur 7 détecte le faisceau laser 5 qui a été stabilisé et elle agit par l'intermédiaire d'un circuit de réaction 18, sur le dispositif d'alimentation 15, pour arrêter le vérin électrique 9 associé au récepteur 7 si bien que le récepteur 7 se trouve arrêté dans l'axe de l'émetteur 6, à la hauteur de sécurité H désirée.

Bien que sur le dessin annexé l'émetteur 6 et le récepteur 7 aient été représentés comme étant alignés coaxialement, il est préférable, en pratique, de les disposer verticalement dans des boîtiers mobiles et de prévoir des moyens, tels que miroirs ou fibres optiques pour dévier horizontalement le faisceau laser pour que celui-ci devienne parallèle au Vé de pliage 2. Une telle disposition permet de loger ces ensembles dans des volumes disposés verticalement de part et d'autre de la machine.

Pour assurer l'inhibition du faisceau laser 5 en fin de course descendante de la lame de pliage 3, c'est-à-dire lorsque cette dernière vient intercepter le faisceau, on prévoit un relais de fin de course 19 solidaire de l'ensemble mobile verticalement comprenant l'émetteur laser 6. Ce relais de fin de course 19 se déplace donc verticalement avec l'émetteur 6 et il est actionné, en fin de course descendante de la lame de pliage 3, par une butée ou une rampe 21 solidaire de cette lame. Ce relais de fin de course 19 est branché de manière à permettre la continuation du mouvement de descente de la lame 3, une fois que cette dernière a intercepté le faisceau laser 5.

Le dispositif suivant l'invention peut comporter également des moyens contrôlant que l'inhibition, qui est nécessaire pour pouvoir franchir le faisceau 5, en substituant à l'énergie normalement transmise par le faisceau laser un courant de substitution, est bien réalisée en un temps très court, en fonction de la vitesse d'approche de la lame de pliage 3. Ceci peut être matérialisé par une temporisation de l'ordre de 0 à 0,1 s. Après quoi, faute d'occultation, le faisceau concerné se remettrait en sécurité. Ceci permet d'interdire toute erreur ou toute fraude visant à neutraliser le faisceau laser pendant la descente de la presse.

Au cas où l'outil supérieur mobile aurait des hauteurs variables, il sera possible d'inhiber automatiquement le faisceau laser à la distance adéquate, compte tenu des limites tolérées par la temporisation, par le remplacement de la butée fixe montée sur le support de l'outil mobile soit par une butée réglable en hauteur avec verrou de blocage rapide soit par un système électronique à cellule reflex à faisceau très étroit ou éventuellement faisceau dérivé à partir de l'émetteur laser qui détecterait le profil de l'outil muni d'un revêtement réfléchissant tel que celui connu sous le nom « SCOTCHLIGHT ». En cas de réponse positive la cellule réceptrice correspondante donnerait un ordre d'inhibition.

Le procédé et le dispositif suivant l'invention s'appliquent également dans le cas où on utilise un second faisceau de protection passant dans le Vé de pliage lui-même.

**Revendications**

1. Procédé de protection, au moyen d'un faisceau laser, d'une machine de travail d'une tôle, telle qu'une presse plieuse, une cisaille, une rouleuse ou une autre machine similaire, comportant un outil (3) mobile verticalement en direction de la tôle en appui sur un support, dans lequel on détermine la hauteur de sécurité où doit se trouver le faisceau laser horizontal par rapport à un plan horizontal de référence, pour assurer la protection de l'utilisateur de la machine, en ajoutant à la hauteur de la surface d'accostage, c'est-à-dire la hauteur de la surface supérieure de la tôle par rapport au plan de référence, une distance de sécurité inférieure à 8 mm, on déplace verticalement l'émetteur du faisceau laser, on mesure en permanence la hauteur effective du faisceau laser émis par rapport au plan de référence, on compare cette hauteur effective du faisceau laser avec la hauteur de sécurité prédéterminée et on arrête le mouvement vertical de l'émetteur du faisceau laser lorsque la hauteur de ce faisceau devient égale à la hauteur de sécurité, est caractérisé en ce qu'on déplace verticalement le récepteur (7), indépendamment de l'émetteur (6), en retard par rapport à celui-ci, jusqu'à ce qu'il se trouve aligné avec l'émetteur (6), ce qui provoque alors l'arrêt du récepteur (7) dans cette position.

2. Dispositif de protection, au moyen d'un faisceau laser (5), d'une machine de travail d'une tôle (4), comportant un outil (3) mobile verticalement en direction de la tôle en appui sur un support (2), un ensemble générateur de faisceau laser horizontal comportant, d'un côté de la machine un émetteur (6) et, de l'autre côté de la machine, un récepteur (7) du faisceau laser, de manière à commander automatiquement l'arrêt de la machine lorsque le faisceau laser est intercepté, des vérins (8, 9) pour déplacer respectivement, dans le sens vertical, l'émetteur (6) et le récepteur (7) du faisceau laser (5), des moyens (13) pour mesurer la hauteur effective (H) de l'émetteur (6) du faisceau laser par rapport à un plan de référence, des moyens (11) pour calculer une hauteur de sécurité où doit se trouver le faisceau laser (5) en ajoutant à la hauteur de la surface d'accostage, c'est-à-dire la hauteur de la surface supérieure (4a) de la tôle (4) par rapport au plan de référence, une distance de sécurité inférieure à 8 mm, un comparateur (12) pour comparer la hauteur effective de l'émetteur (6) du faisceau laser avec la hauteur de sécurité calculée et pour commander le mouvement vertical de l'émetteur et l'arrêt de celui-ci lorsque la hauteur (H) du faisceau laser (5) devient égale à la hauteur de sécurité précalculée, caractérisé en ce que le comparateur (12) est connecté au dispositif d'alimentation (15) associé au vérin (9) commandant le déplacement du récepteur (7) de manière à appliquer, avec un léger décalage, un signal commandant le déplacement vertical du récepteur (7) après celui de l'émetteur (6) jusqu'à ce que le récepteur (7) s'arrête à l'alignement avec l'émetteur (6).

3. Dispositif suivant la revendication 2 comportant un relais de fin de course (19) et une rampe ou butée (21) solidaire de l'outil mobile verticalement et actionnant le relais de fin de course (19) pour inhiber le faisceau laser (5) en fin de course descendante de l'outil (3), caractérisé en ce que la butée (21) est réglable en hauteur en fonction de la hauteur de l'outil supérieur mobile et il comporte des moyens de temporisation pouvant aller jusqu'à 0,1 s, permettant de contrôler que l'inhibition, qui est nécessaire pour pouvoir franchir le faisceau (5), en substituant à l'énergie normalement transmise par le faisceau laser un courant de substitution, est bien réalisée en un temps très court, en fonction de la vitesse d'approche de l'outil (3).

**Claims**

1. Method for protecting, by means of a laser beam, a sheet metal working machine, such as a bending press, a shearing machine, a rolling machine or other like machine, comprising a tool (3) vertically mobile in the direction of the sheet metal in abutment on a support, in which the safety height where the horizontal laser beam must be located with respect to a horizontal reference plane is determined in order to ensure protection of the user of the machine, by adding to the height of the approach surface, i. e. the height of the upper surface of the sheet metal with respect to the reference plane, a safety distance less than 8 mm ; the emitter of the laser beam is displaced vertically ; the effective height of the laser beam emitted is permanently measured with respect to the reference plane ; this effective height of the laser beam is compared

with the predetermined safety height ; and the vertical movement of the emitter of the laser beam is stopped when the height of this beam becomes equal to the safety height, is characterized in that the receiver (7) is displaced vertically, independently of the emitter (6), delayed with respect thereto, until it is aligned with the emitter (6), which then provokes stop of the receiver (7) in this position.

2. Device for protecting, by means of a laser beam (5), a machine for working sheet metal (4), comprising a tool (3) mobile vertically in the direction of the sheet metal in abutment on a support (2), a horizontal laser beam generating assembly comprising, on one side of the machine, an emitter (6) and, on the other side of the machine, a receiver (7) of the laser beam, so as automatically to control stop of the machine when the laser beam is intercepted, jacks (8, 9) for displacing respectively, in the vertical direction, the emitter (6) and the receiver (7) of the laser beam (5), means (13) for measuring the effective height (H) of the emitter (6) of the laser beam with respect to a reference plane, means (11) for calculating a safety height where the laser beam (5) must lie by adding to the height of the approach surface, i. e. the height of the upper surface (4a) of the sheet metal (4) with respect to the reference plane, a safety distance less than 8 mm, a comparator (12) for comparing the effective height of the emitter (6) of the laser beam with the calculated safety height and for controlling the vertical movement of the emitter and stop thereof when the height (H) of the laser beam (5) becomes equal to the precalculated safety height, characterized in that the comparator (12) is connected to the supply device (15) associated with the jack (9) controlling displacement of the receiver (7) so as to apply, with a slight offset, a signal controlling vertical displacement of the receiver (7) after that of the emitter (6) until the receiver (7) stops in line with the emitter (6).

3. Device according to Claim 2 comprising an end of stroke relay (19) and a ramp or stop (21) fast with the vertically mobile tool and actuating the end of stroke relay (19) in order to inhibit the laser beam (5) at the end of descending stroke of the tool (3), characterized in that the stop (21) is adjustable in height as a function of the height of the mobile upper tool and it comprises timing means able to go up to 0.1 s, for controlling that the inhibition, which is necessary in order to be able to traverse the beam (5), by substituting for the energy normally transmitted by the laser beam a substitution current, is well effected in a very short time, as a function of the speed of approach of the tool (3).

**Patentansprüche**

1. Verfahren zur Unfallverhütung mittels eines Laserstrahlbündels, an einer Blechbearbeitungsmaschine, wie z. B. einer Abkantpresse, einer Schere, einer Rundbiegemaschine oder einer anderen, ähnlichen Maschine mit einem vertilkal in Richtung auf das auf einer Auflage aufliegende Blech beweglichen Werkzeug (3), bei der die Sicherheitshöhe durch den Abstand bestimmt wird, den ein horizontales Laserstrahlbündel von einer horizontalen Bezugsebene einhält, um den Schutz des Benutzers der Maschine sicherzustellen, wobei man zur Höhe der Anlagefläche, d. h. der Höhe der Oberseite des Bleches über der Bezugsebene, einen unteren Sicherheitsabstand von 8 mm zugibt, den Laserstrahler vertikal verstellt, ständig die effektive Höhe des ausgesandten Laserstrahlbündels gegenüber der Bezugsebene mißt, diese effektive Höhe des Laserstrahlbündels mit der vorgegebenen Sicherheitshöhe vergleicht und die Vertikalbewegung des Laserstrahlers stillsetzt, wenn die Höhe des Laserstrahlbündels gleich der Sicherheitshöhe ist, dadurch gekennzeichnet, daß man den Empfänger (7) unabhängig vom Laserstrahler (6) und diesem gegenüber mit Verzögerung vertikal verstellt, bis er sich in einer gegenüber dem Laserstrahler (6) ausgerichteten Position befindet, wodurch die Stillsetzung des Empfängers (7) in dieser Position veranlaßt wird.

2. Vorrichtung zur Unfallverhütung mittels eines Laserstrahlbündels (5) bei einer Blechbearbeitungsmaschine, die ein vertikal in Richtung auf das auf einer Auflage (2) aufliegende Blech (4) bewegliches Werkzeug (3) umfaßt, sowie eine zur Erzeugung eines horizontalen Laserstrahlbündels geeignete Einrichtung, die auf einer Seite der Maschine mit einem Laserstrahler (6) und auf der anderen Seite der Maschine mit einem Empfänger (7) für das Laserstrahlbündel derart versehen ist, daß automatisch der Stillstand der Maschine veranlaßt wird, wenn das Laserstrahlbündel unterbrochen wird, sowie Stellspindeln (8, 9) zur jeweiligen vertikalen Verlagerung des Laserstrahlers (6) bzw. des Empfängers (7) des Laserstrahlbündels, Mittel (13) zum Messen der effektiven Höhe (H) des Laserstrahlers (6) über einer Bezugsebene, Mittel (11) zur Berechnung der Sicherheitshöhe, in der sich das Laserstrahlbündel (5) befinden muß, indem man zur Höhe der Anlagefläche, d. h. der Höhe der Oberseite (4a) des Bleches (4) über der Bezugsebene, einen unteren Sicherheitsabstand von 8 mm zugibt, eine Vergleichsschaltung (12) zum Vergleich der effektiven Höhe des Laserstrahlers (6) mit dem berechneten Sicherheitsabstand und zur Steuerung der vertikalen Bewegung des Laserstrahlers und dessen Stillsetzung, wenn die Höhe (H) des Laserstrahlbündels (5) gleich dem vorberechneten Sicherheitsabstand ist, dadurch gekennzeichnet, daß die Vergleichsschaltung mit der der Stellspindel (9) zur Steuerung der Verlagerung des Empfängers zugeordneten Speisevorrichtung (15) derart verbunden ist, daß auf sie mit geringer Verzögerung ein die vertikale Verlagerung des Empfängers (7) nach der des Laserstrahlers (6) steuerndes Signal übertragen wird, bis der Empfänger (7) gegenüber dem Laserstrahler (6) ausgerichtet stillgesetzt wird.

3. Vorrichtung nach Anspruch 2, mit einem dem Hubende zugeordneten Endschalter (19) und einem fest mit dem vertikal beweglichen Werkzeug verbundenen und den Endschalter zur Unterdrückung des Laserstrahlbündels (5) am Ende des Abwärtshubs des Werkzeugs (3) betätigenden Anlauframpe (21), dadurch gekennzeichnet, daß die Anlauframpe (21) hinsichtlich ihrer Höhe in Abhängigkeit von der Höhe des oberen, beweglichen Werkzeugs einstellbar ist und sie Mittel zur Verzögerung bis zu 0,1 s aufweist, die es gestatten, zu überwachen, daß die zur Überschreitung des Laserstrahlbündels (5) erforderliche Unterdrückung durch Ersetzung der normalerweise durch das Laserstrahlbündel übertragenen Energie durch einen Ersatzstrom, in sehr kurzer, von der Annäherungsgeschwindigkeit des Werkzeugs (3) abhängiger Zeit verwirklicht wird.

0 146 460

1